(19) Europäisches Patentamt
European Patent Office
Office européen des brevets

(11) **EP 3 329 636 B1**

(12) **EUROPÄISCHE PATENTSCHRIFT**

(45) Veröffentlichungstag und Bekanntmachung des Hinweises auf die Patenterteilung:
**28.12.2022   Patentblatt 2022/52**

(21) Anmeldenummer: **16766470.5**

(22) Anmeldetag: **26.07.2016**

(51) Internationale Patentklassifikation (IPC):
**H04L 9/08** *(2006.01)*        **H04L 9/40** *(2022.01)*

(52) Gemeinsame Patentklassifikation (CPC):
**H04L 9/0838; H04L 9/0861; H04L 9/0866; H04L 63/061**

(86) Internationale Anmeldenummer:
**PCT/DE2016/100338**

(87) Internationale Veröffentlichungsnummer:
**WO 2017/016548 (02.02.2017 Gazette 2017/05)**

(54) **VERFAHREN ZUM ERZEUGEN EINES KRYPTOGRAPHISCHEN SCHLÜSSELS FÜR EINE KABELBASIERTE KOMMUNIKATION**

METHOD FOR GENERATING A CRYPTOGRAPHIC KEY FOR A CABLE-BASED COMMUNICATION

PROCÉDÉ DE GÉNÉRATION D'UNE CLÉ CRYPTOGRAPHIQUE POUR UNE COMMUNICATION PAR CÂBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2015   DE 102015112224**

(43) Veröffentlichungstag der Anmeldung:
**06.06.2018   Patentblatt 2018/23**

(73) Patentinhaber: **Jacobs University Bremen GmbH 28759 Bremen (DE)**

(72) Erfinder: **HENKEL, Werner 28832 Achim (DE)**

(74) Vertreter: **Weidner Stern Jeschke Patentanwälte Partnerschaft mbB Universitätsallee 17 28359 Bremen (DE)**

(56) Entgegenhaltungen:
**US-A1- 2011 087 897**

• **MASOUD GHOREISHI MADISEH ET AL: "Secret Key Generation within Peer-to-Peer Network Overlays", P2P, PARALLEL, GRID, CLOUD AND INTERNET COMPUTING (3PGCIC), 2012 SEVENTH INTERNATIONAL CONFERENCE ON, IEEE, 12. November 2012 (2012-11-12), Seiten 156-163, XP032274954, DOI: 10.1109/3PGCIC.2012.62 ISBN: 978-1-4673-2991-0**
• **FILIP ALEXANDRA ET AL: "Variable guard band construction to support key reconciliation", 2014 IEEE INTERNATIONAL CONFERENCE ON ACOUSTICS, SPEECH AND SIGNAL PROCESSING (ICASSP), IEEE, 4. Mai 2014 (2014-05-04), Seiten 8173-8177, XP032618026, DOI: 10.1109/ICASSP.2014.6855194 [gefunden am 2014-07-11]**

EP 3 329 636 B1

## Beschreibung

Die Erfindung betrifft ein Verfahren zum Erzeugen eines kryptographischen Schlüssels für eine kabelbasierte Kommunikation und einen Rechner, welcher derart eingerichtet ist, dass ein solches Verfahren durchführbar ist.

Moderne asymmetrische Verschlüsselungsverfahren wie z.B. das Public-Key-Verschlüsselungsverfahren benutzen einen öffentlichen Schlüssel, um einen Klartext in einen Geheimtext umzuwandeln, aus dem der Klartext mit einem geheimen Schlüssel wieder gewonnen werden kann. Hierbei muss der geheime Schlüssel unter allen Umständen geheim gehalten werden, und es muss praktisch unmöglich sein, ihn aus dem öffentlichen Schlüssel zu berechnen. Ferner muss sichergestellt sein, dass der öffentliche Schlüssel auch wirklich dem Empfänger zugeordnet ist.

Um die mit der Geheimhaltung verbundenen Probleme zu vermeiden, wurden Verfahren entwickelt, welche zum Ziel haben, den beiden Kommunikationspartner einen geheimen Schlüssel zu verschaffen, ohne, dass ein Dritter diesen geheimen Schlüssel erhalten kann. Neben den Methoden der Quantenkryptographie sind Verfahren bekannt, die die physikalischen Eigenschaften des verwendeten Kommunikationssystems benutzen.

US 2007/0177729 A1 offenbart das Erzeugen eines geheimen Schlüssels in drahtlosen Kommunikationsnetzwerken.

WO 2010/030927 A2 offenbart ein Verfahren und ein System zum geheimen Schlüsselaustausch mittels der Eigenschaften der Drahtlosverbindung und der zufälligen Bewegung der Vorrichtung.

Ein weiterer Ansatz aus dem Stand der Technik ist im Dokument US 2011/087897 A1 gezeigt.

Aufgabe der Erfindung ist es, den Stand der Technik zu verbessern.

Die Lösung dieser Aufgabe ergibt sich durch die Merkmale der angehängten Patentansprüche 1 bis 11.

Gelöst wird die Aufgabe durch ein Verfahren zum Erzeugen eines kryptographischen Schlüssels für eine elektronische, kabelbasierte Kommunikation für einen ersten Benutzer als auch einen zweiten Benutzer,
wobei das Verfahren folgende Schritte aufweist:

- Messen einer Übertragungsfunktion oder Bestimmen einer aus der gemessenen Übertragungsfunktion abgeleiteten Größe zwischen dem ersten und dem zweiten Benutzer durch den ersten oder den zweiten Benutzer,
- Quantisieren der Übertragungsfunktion oder der daraus abgeleiteten Größe, sodass quantisierte Werte der Übertragungsfunktion oder der abgeleiteten Größe vorliegen, und
- Zuweisen eines Bitmusters zu den quantisierten Werten der Übertragungsfunktion oder der abgeleiteten Größe, wobei das Bitmuster zumindest einen Teil des kryptographischen Schlüssels bildet.

Mit dem vorliegenden Verfahren kann über eine elektronische, kabelbasierte Kommunikation bei zwei kommunizierenden Benutzern ein kryptographischer Schlüssel erzeugt werden, ohne dass der Schlüssel selbst übertragen werden muss und ohne dass ein Dritter den Schlüssel erlangen kann. Dieses Erzeugen des Schlüssels basiert auf den physikalischen Eigenschaften des durch das Kabel charakterisierten Informationskanals. Dabei macht sich das Verfahren Die Tatsache zunutze, dass diese Übertragungsfunktionen zwischen einem Sender und Empfänger bei Vertauschen von Sender und Empfänger weitgehend symmetrisch, d.h. näherungsweise gleich, sind. Diese Symmetrie ermöglicht es, dass die beiden Benutzer der Kommunikation einen geheimen kryptographischer Schlüssel jeweils selbst generieren können, ohne dass der kryptographische Schlüssel selbst zwischen den beiden Benutzern über die kabelbasierte Kommunikation ausgetauscht werden müsste.

Die Übertragungs- und Fernnebensprechübertragungsfunktion sind bei einem idealen Kabel ohne Abzweigungen bis auf unterschiedliches Rauschen auf beiden Seiten und nichtideale Eigenschaften der Sende- und Empfangseinrichtungen gegenüber Vertauschen von Sender und Empfänger symmetrisch. Bei Fernnebensprechübertragungsfunktionen in einem Netzsegment mit Stichleitungen können sich Asymmetrien ergeben.

Folgendes Begriffliche sei vorab erläutert und soll für den gesamten Text gelten.

Ein "kryptographischer Schlüssel" ist insbesondere ein Schlüssel, welcher durch eine Bitfolge repräsentiert wird.

Die Kommunikation zwischen dem ersten und dem zweiten Benutzer erfolgt mittels eines insbesondere elektrischen Kabels, welches mindestens eine elektrisch leitende Ader aufweist. In diesem Fall kann die direkte Übertragungsfunktion gemessen werden.

Um eine bessere Abschirmung zu erzielen, kann das Kabel mindestens ein Adernpaar aufweisen.

Um eine Fernnebensprechübertragungsfunktion messen zu können, kann das Kabel insbesondere mindestens zwei Adernpaare aufweisen.

Eine leitende Ader kann auch durch Erdverbindung ersetzt werden. Verbindungen zu den leitenden Adern können z.B. durch Steckdosen, Schneid- oder Klemmverbindungen gegeben sein.

Die Kommunikation erfolgt zwischen dem ersten und zweiten Benutzer. Der erste Benutzer wird insbesondere Alice und der zweite Benutzer insbesondere Bob genannt.

Der erste als auch der zweite Benutzer können Nachrichten senden und empfangen. Vor dem Verwenden wird die Nachricht mittels des kryptographischen Schlüssels verschlüsselt und nach dem Empfangen wird die empfangene Nachricht mittels des kryptographischen Schlüssels entschlüsselt.

Der Dritte, der eine Kommunikation zwischen dem ersten Benutzer und dem zweiten Benutzer abhören will, wird insbesondere auch Eve genannt.

Für diesen Dritten wird angenommen, dass ein gewisser Zugang zu dem Kabel besteht. Der Zugang kann durch weitere Steckdosen im Netzsegment gegeben sein. Ferner kann der Zugang auch durch direktes Kontaktieren der Adern mit Messspitzen oder Schneidverbindern geschehen.

Bevorzugt hat Eve zu Alice und/oder Bob einen Mindestabstand, welcher so gewählt sein soll, dass die von Eve abgehörten Übertragungsfunktion sich so deutlich von der zwischen Alice und Bob verwendeten Übertragungsfunktion unterscheidet, dass es Eve nicht möglich ist, den kryptographischen Schlüssel zu bestimmen. Dieser Mindestabstand beträgt einige Meter bis zu 100m. Grundsätzlich gilt je größer der Abstand, desto sicherer ist das Verfahren.

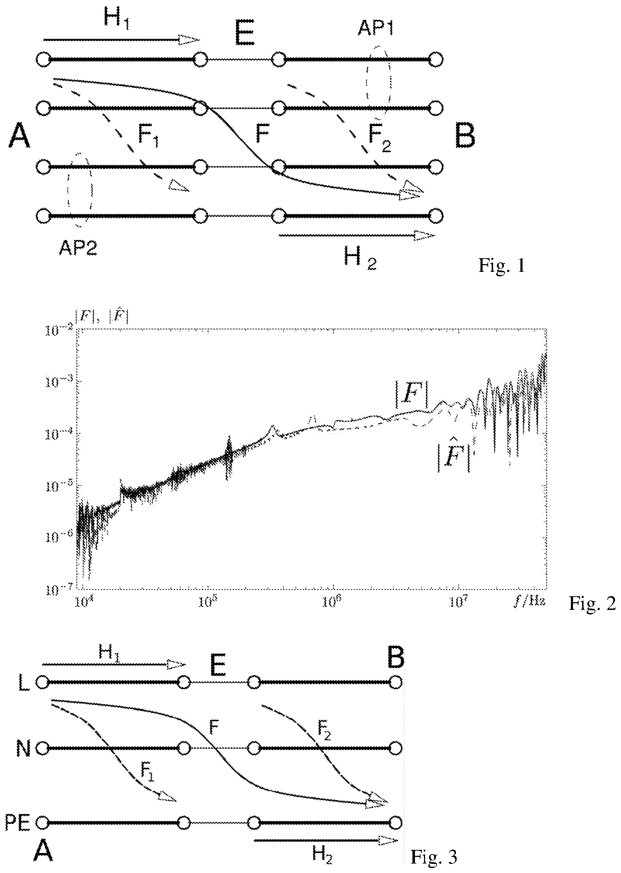

Falls die direkte Übertragungsfunktion verwendet wird, sind die Übertragungsfunktionen beispielsweise dann zwischen unterschiedlichen Steckdosenpaaren ausreichend unterschiedlich. Diese Unterschiede resultieren aus den verschiedenen Netzbeschaltungen, die sich - von den einzelnen Steckdosen aus gesehen - ergeben. Bei einem isolierten Kabel für eine Punkt-zu-Punkt-Verbindung, bei dem Eve als Angreifer zwischen Alice und Bob eine Verbindung zum Kabel herstellt, bietet sich die Fernnebensprechübertragungsfunktion zur Schlüsselgenerierung an. Bevorzugt sind im Kabelnetzsegment Stichleitungen vorgesehen. An dieser Stelle sei folgendes Begriffliche erläutert. Hierzu sei auch insbesondere die Figur 1 herangezogen. In Figur 1 ist Alice mit dem Buchstaben A, Bob mit dem Buchstaben B und Eve mit dem Buchstaben E bezeichnet.

Die direkte Übertragungsfunktion von Alice zu Eve wird mit H1 und die direkte Übertragungsfunktion von Eve zu Bob wird mit H2 bezeichnet. Die direkte Übertragungsfunktion von Alice zu Bob wird mit H bezeichnet.

Die Fernnebensprechübertragungsfunktion von Alice zu Eve wird mit F1 und die Fernnebensprechübertragungsfunktion von Eve zu Bob wird mit F2 bezeichnet. Die Fernnebensprechübertragungsfunktion von Alice zu Bob wird mit F bezeichnet. Sowohl F1, F2, F, H1, H2 und H sind frequenzabhängige Funktionen.

Figur 1 zeigt eine Anordnung, mit der die Fernnebensprechübertragungsfunktion zwischen Alice und Bob gemessen werden kann. Hier wird ferner ein Angreifer Eve dargestellt, der zwischen Alice und Bob Zugriff auf die kabelbasierte Kommunikation zwischen Alice und Bob hat. Figur 1 zeigt zwei nebeneinander verlaufende Adernpaare AP1, AP2. Sowohl Adernpaar AP1 als auch Adernpaar AP2 weist jeweils zwei Adern oder Leitungen auf. An dieser Stelle sei angemerkt, dass Kabel und Adernpaare, wo technisch sinnvoll, synonym verwendet werden

Bei dem genannten "Man-in-the-Middle-Angriffs" ist es Eve jedoch eventuell möglich, Teile der Fernnebensprechübertragungsfunktion von Alice zu Eve - auch F1 genannt - und von Eve zu Bob - auch F2 genannt- und ebenfalls die direkten Übertragungsfunktion von Alice zu Eve - H1 genannt - und von Eve zu Bob - H2 genannt - zu erfassen.

Ein Fachmann könnte nun annehmen, dass die gesamte Fernnebensprechübertragungsfunktion von Alice zu Bob gemäß der Gleichung

$$F(j\omega) \approx \hat{F}(j\omega) = F_1(j\omega)H_2(j\omega) + F_2(j\omega)H_1(j\omega) \tag{1}$$

berechnet werden kann. Hierbei steht j für die komplexe Einheit, $\omega$ für die Kreisfrequenz. $\hat{F}$ steht für eine Schätzung oder einen Näherungswert. Diese Annahme könnte aufgrund der Zweiteilung der kabelbasierten Kommunikation gerechtfertigt sein. Die gesamte Fernnebensprechübertragungsfunktion könnte näherungsweise die Summe aus den beiden Beiträgen sein.

Zum einen wird das Signal direkt von Alice zu Eve übertragen, dies entspricht H1 und von Eve zu Bob ist der Beitrag zur Fernnebensprechübertragungsfunktion gleich F2. Um den Anteil zur Fernnebensprechübertragungsfunktion des ersten Beitrags zu berechnen, muss somit H1 mit F2 multipliziert werden.

Der zweite Beitrag setzt sich entsprechend aus der Fernnebensprechübertragungsfunktion von Alice zu Eve - dies entspricht F1 - und der direkten Übertragungsfunktion von Eve zu Bob - dies entspricht H2 - zusammen.

Der Fachmann könnte ferner annehmen, dass sich die direkte Übertragungsfunktion von Alice zu Bob - H genannt - einfach aus dem Produkt der Teilübertragungsfunktionen H1 und H2 ergibt.

Praktische Messungen zeigen jedoch, dass die beiden obenstehenden Annahmen überraschenderweise nicht korrekt sind. Es wird bestenfalls der Trend teilweise korrekt wiedergegeben, nicht jedoch der komplette und exakte Verlauf. Ausführungsbeispiele hierzu sind in den übrigen Figuren zu sehen.

Bei Verwendung der Fernnebensprechübertragungsfunktion liegt die Abweichung zwischen Schätzung und der tatsächlichen Gesamtfernnebensprechübertragungsfunktion in der Vernachlässigung von Kopplungseffekten über die Schnittstelle, d.h. an der Position von Eve, hinaus. Bei Netzsegmenten und Zugang über Steckdosen, liegt die Abweichung an der teilweisen Nutzung verschiedener Kabel oder an den unterschiedlichen Netzstrukturen wie z.B. Stichleitungen mit oder ohne Verbraucher, die an den verschiedenen Steckdosen anzutreffen sind.

Die "Übertragungsfunktion" kann insbesondere eine einheitenlose, komplexwertige Funktion oder komplexwertiger Wert sein, welche oder welcher in der Regel frequenzabhängig ist, jedoch auch noch von weiteren Größen abhängig sein kann. Die Übertragungsfunktion ist definiert als das Verhältnis der komplexen Ausgangsspannung zur komplexen Eingangsspannung.

Eine "aus der gemessenen Übertragungsfunktion abgeleiteten Größe" ist beispielsweise ein komplexer Wert welcher anhand der Übertragungsfunktion ermittelt wird. So können beispielsweise beim Messen der Übertragungsfunktion an einigen Frequenzen Werteeinbrüche oder lokale Wertemaxima entstehen, welche wiederum Basis für das Bitmuster dienen.

Für den Fall, dass die Übertragungsfunktion zwischen dem ersten und dem zweiten Benutzer symmetrisch ist, ist es bevorzugt, dass die Übertragungsfunktion zwischen dem ersten und dem zweiten Benutzer durch den ersten oder den zweiten Benutzer gemessen wird.

Quantisieren ist insbesondere eine klassische Technik der Signalverarbeitung, bei der die Werte einer gegebenen Funktion bestimmten, nichtkontinuierlichen, also quantisierten, Werten derselben Funktion zugeordnet werden. Diese Technik kann insbesondere zur Datenkompression verwendet werden. Falls die Quantisierung als Funktion eine skalare Funktion verwendet, spricht man insbesondere von einer skalaren Quantisierung. Falls die Quantisierung als Funktion vektorwertige Funktionen verwendet, handelt es sich um eine Vektorquantisierung.

Eine Vektorquantisierung kann insbesondere zwei Schritte aufweisen. Im ersten Schritt, dem sogenannten Training, wird die Tabelle, welche auch Codebuch genannt wird, mit häufig vorkommenden Merkmalsvektoren erstellt. Im zweiten Schritt wird für weitere Vektoren jeweils der Codebuchvektor mit dem geringsten Abstand bestimmt. Durch diese Quantisierung der z.B. zweidimensionalen Vektoren ergeben sich, falls die Übertragungsfunktion als zweidimensionale Funktion des Real- und Imaginärteils oder dargestellt wird, sogenannten Voronoi-Regionen, welche in einem Voronoi-Diagramm darstellbar sind.

Nach dem Quantisieren der Übertragungsfunktion weist die quantisierte Übertragungsfunktion lediglich quantisierte Werte als Funktionswerte auf.

Den quantisieren Werten wird ein Bitmuster zugeordnet. Falls Voronoi-Regionen verwendet werden, werden bevorzugt den Voronoi-Regionen Bitmuster zugeordnet.

Die Kabel können bevorzugt in ihren Eigenschaften durch zusätzliche Maßnahmen verändert werden, z.B. durch veränderliche Stichleitungen oder veränderlichen Kopplungsfunktionen, zusätzlich zu Änderungen, die sich durch An-/Abschalten von Verbrauchern in Stromnetz ergeben. Damit können neue unabhängige Bitmuster erzeugt werden, die dann zur Bildung eines Schlüssels zusammengefügt werden. Somit kann die zu messende Übertragungsfunktion zufallsbasiert aktiv verändert werden. Dies ist beispielsweise auch durch einstellbar veränderliche Abschlusswiderstände realisierbar, welchen per Zufallsgenerator ein Abschlusswiderstandswert aufgeprägt wird. Die Übertragungsfunktion ändert sich insbesondere dadurch, dass sich die physikalischen Eigenschaften des Kabels ändern.

Einfache stark vereinfachte Realisierung der Erfindung erfolgt somit wie folgt. Alice sendet Bob ein Sinussignal mit veränderlicher Frequenz. Die Parameter dieser Funktion seien Bob bekannt. Nun misst Bob (vereinfacht) die Übertragungsfunktion für eine bestimmte Frequenz und ermittelt einen zugehörigen komplexen Übertragungsfunktionswert. Dieser Übertragungsfunktionswert wird in einer komplexen Ebene mit 4 Quadranten (z.B. durch Koordinatenachsen getrennt) eingefügt. Jeder Quadrant entspricht einem Bitmuster. Somit sei der erste Quadrant 00, der zweite Quadrant 01, der dritte Quadrant 10 und der letzte Quadrant 11. Liegt nun der komplexe Übertragungsfunktionswert im dritten Quadranten lautet der kryptographische Teilschlüssel (binär) 10, entsprechend der Bezeichnung des dritten Quadranten. Dies kann nun für weitere (vorher abgesprochene) Frequenzen erfolgen, wobei durch ein Aneinanderreihen der kryptographische Teilschlüssel der kryptographische (Gesamt-)Schlüssel erzeugt wird.

Gemäß einer Ausführungsform ist die Übertragungsfunktion eine direkte Übertragungsfunktion oder eine Fernnebensprechübertragungsfunktion. Das Fernnebensprechen wird auch Fernübersprechen genannt. Die Fernnebensprechübertragungsfunktion wird auch FEXT-Übertragungsfunktion genannt, wobei FEXT für Far-End Crosstalk steht. Der Vorteil der Benutzung der direkten Übertragungsfunktion ist, dass diese sehr einfach gemessen werden kann. Der Vorteil der Benutzung der Fernnebensprechübertragungsfunktion ist, dass es ein Dritter, der die beiden Benutzer abhören will, in diesem Fall wesentlich schwerer hat, die Fernnebensprechübertragungsfunktion zu schätzen oder zu ermitteln.

Für den Fall, dass die Übertragungsfunktion zwischen dem ersten und dem zweiten Benutzer asymmetrisch, insbesondere nicht perfekt symmetrisch, ist, ist es gemäß einer Ausführungsform vorgesehen, dass die Übertragungsfunktion zwischen dem ersten und dem zweiten Benutzer durch den ersten und den zweiten Benutzer gemessen wird. Falls nun jeder Benutzer gemäß dem oben beschriebenen Verfahren jeweils einen Schlüssel erzeugt, so kann es vorkommen, dass die beiden erhaltenen Schlüssel nicht vollkommen identisch sind. Für diesen Fall können die Abweichungen zwischen den beiden Schlüsseln durch sogenannte Key-Reconciliation-Verfahren vermieden oder korrigiert werden.

Falls nur bestimmte Übertragungsfunktionen die nötige annähernde Symmetrie ausweisen, z.B. nur die direkte Übertragungsfunktion, ist es bevorzugt, die besser symmetrische Übertragungsfunktion zu benutzen. -

Asymmetrien und Schlüsselabweichungen können von nichtidealen Eigenschaften der Bauteile oder unkorreliertem Rauschen bei Alice und Bob herrühren. Als Key-Reconciliation-Verfahren kommen beispielsweise Schutzintervalle bei der Vektorquantisierung oder Codebasierte Verfahren, z.B. das Slepian-Wolf Coding in Frage. Diese Verfahren sind z.B. in den folgenden Veröffentlichungen beschrieben:

[1] Islam, N., Graur, O., Henkel, W., Filip, A.: LDPC Code Design Aspects for Physical-Layer Key Reconciliation, IEEE International Global Communications Conference, San Diego, California, 2015

[2] Filip, A., Henkel, W.: Variable Guard Band Construction to Support Key Reconciliation, IEEE International Conference on Acoustics, Speech, and Signal Processing (ICASSP 2014), Florence, Italy, 2014

[3] Filip, A., Mehmood, R., Wallace, J., Henkel, W.: Physical-Layer Key Generation Supported by RECAP Antenna Structures, 9th International ITG Conference on Source and Channel Coding (SCC), Munich, Germany, 2013

[4] Etesami, J., Henkel, W.: LDPC Code Construction for Wireless Physical-Layer Key Reconciliation, First IEEE International Conference on Communications in China (ICCC 12), Beijing, China, 2012

Gemäß einer Ausführungsform weist der Informationskanal mindestens ein Kabel auf, in dem zwei Adernpaare verlaufen. Mit dieser Ausführungsform können sowohl die direkte Übertragungsfunktion als auch die Fernnebensprechübertragungsfunktion gemessen werden. Im Falle der Benutzung der Fernnebensprechübertragungsfunktion wird eine erhöhte Sicherheit gegenüber Abhörangriffen Dritter erzielt.

Gemäß einer weiteren Ausführungsform weist der Informationskanal mindestens ein Dreileiterkabel auf. Das Dreileitersystem kann so wie ein Doppeladerpaar verwendet werden. Hierzu wird die erste und die zweite Ader als das erste Paar und die zweite und die dritte Ader als das zweite Paar verwendet.

Um vorteilhafterweise auch mehrdimensionale Funktionen quantisieren zu können, ist die Quantisierung eine Vektorquantisierung. Im Fall von skalaren Funktionen kann eine skalare Quantisierung verwendet werden.

Gemäß einer Ausführungsform wird die Vektorquantisierung auf eine Größe angewendet, welche durch Real- und Imaginärteil oder Betrag und Phase charakterisiert ist. Eine komplexe Größe kann durch den Real- und Imaginärteil oder den Betrag und die dazugehörige Phase vollständig beschrieben werden. Eine zweidimensionale Vektorgröße kann ebenfalls durch Betrag und die dazugehörige Phase vollständig beschrieben werden.

Um vorteilhafterweise eine Mindestkonfiguration zu erreichen, wird die Übertragungsfunktion bei mindestens einer Frequenz verwendet.

Gemäß einer weiteren Ausführungsform wird die Übertragungsfunktion bei einer Vielzahl von Frequenzen verwendet. Dies hat den Vorteil, dass eine Vielzahl von Bitmustern zur Schlüsselerzeugung benutzt werden können. Ferner kann die Information, welche Frequenzen benutzt werden, auch einen möglichen Angriff von einem Dritten abwehren, wenn der Dritte nicht weiß, welche Frequenzen zur Schlüsselerzeugung benutzt werden.

Um vorteilhafterweise standardisierte Modulationsverfahren zur Datenübertragung verwenden zu können, ist die oben genannten mindestens eine Frequenz eine Frequenz eines Mehrträgersystems, insbesondere ein Orthogonales Frequenzmultiplexverfahren OFDM (engl. Orthogonal Frequency-Division Multiplexing) oder Discrete Multitone Transmission (DMT).

Gemäß einer Ausführungsform wird die Übertragungsfunktion in einer Zeitbasis, einer Frequenzbasis oder einer anderen geeigneten Basis dargestellt und die Quantisierung erfolgt in dieser Darstellung. Durch eine geeignete Transformation der Übertragungsfunktion geeignete Basis, die das System in einer einfachen Form beschreibt, kann erreicht werden, dass sich das Quantisieren einfach berechnen lässt.

In einer anderen Ausführungsform können auch Frequenzen von lokalen Minima oder lokalen Maxima der Übertragungsfunktion oder entsprechend der FEXT-Übertragungsfunktion zur Schlüsselgenerierung herangezogen werden.

Weiterhin kann die Aufgabe gelöst werden durch einen Rechner, welcher derart eingerichtet ist, dass ein zuvor beschriebenes Verfahren durchführbar ist.

Damit kann vorteilhafterweise erreicht werden, dass das zuvor beschriebene Verfahren auf einen Rechner oder Computer ausgeführt wird.

Im Weiteren wird die Erfindung anhand von Ausführungsbeispielen näher erläutert. Es zeigen

Figur 2 zeigt die Amplitude $|F|$ der gesamten Fernnebensprechübertragungsfunktion zwischen den beiden kommunizierenden Benutzern Alice und Bob im Vergleich zur Amplitude des Berechnungsergebnisses $|\hat{F}|$, das dem Dritten, auch Eve genannt, bestenfalls zur Verfügung stände, in Abhängigkeit der Frequenz.

Figur 3 zeigt eine schematische Darstellung eines Energieversorgungskabels mit drei Adern.

Figur 4 zeigt Messungen von direkten Übertragungsfunktionen zwischen Alice und Bob und Alice und Eve für ein in Figur 3 dargestelltes Energieversorgungskabel, an dem Steckdosen mit noch nicht perfekt gestalteten Endeinrichtungen angeschlossen sind. Figur 4 zeigt ebenso die jeweiligen entgegengesetzten Messungen zwischen Bob und Alice und Eve und Alice, wobei geringe Abweichungen zwischen den entgegengesetzten Messungen auf die nichtperfekten Eigenschaften der Messeinrichtung zurückzuführen sind.

Figur 5 zeigt den Betrag der Fernnebensprechübertragungsfunktionen, die in einem Dreiadersystem innerhalb eines fünfadrigen Kabels zwischen Alice und Bob gemessen wurden.

Figur 2 zeigt die Amplitude $|F|$ der gesamten Fernnebensprechübertragungsfunktion zwischen den beiden kommunizierenden Benutzern Alice und Bob im Vergleich zur Amplitude des Berechnungsergebnisses $|\hat{F}|$, das dem Dritten, auch Eve genannt, bestenfalls zur Verfügung stände, in Abhängigkeit der Frequenz. In Figur 2 sind ebenfalls die beiden Amplituden $|F|$ und $|\hat{F}|$ für die Übertragung von Bob zu Alice dargestellt. Diese sind jedoch kaum unterscheidbar von der Übertragung von Alice zu Bob.

Für diesen Fall belegt dies, dass der Angreifer Eve nicht in der Lage ist, die Fernnebensprechübertragungsfunktion zu rekonstruieren. Somit ist er auch nicht in der Lage, den einen korrekten kryptographischen Schlüssel zu erhalten.

Figur 3 zeigt eine schematische Darstellung eines Energieversorgungskabels mit drei Adern. Die drei Adern weisen den Leiter L, den Nullleiter N und den Schutzleiter PE auf. Bei Anwendung in Energieversorgungskabeln stehen oft keine zwei getrennten Doppeladern zur Verfügung. Die Fernnebensprechübertragungsfunktion kann hierbei gemäß Figur 3 zwischen den Paaren L-N und N-PE oder vergleichbaren Paarungen gemessen werden. Hierzu kommt, dass Eve ü nur zu anderen Steckdosen im Netzsegment Zugang hat. Damit ist eine Rückberechnung oder auch nur Schätzung der Übertragungsfunktion ausgeschlossen.

Bei Verwendung der Übertragungsfunktion und gleichzeitigem Einsatz von Bit-Loading würde jedoch die Übertragungsfunktion indirekt zu einem gewissen Maße durch Mitteilung der Bit-Belegung kommuniziert, was dann näherungsweise Rückschlüsse auf die Übertragungsfunktion zuließe. Allerdings geht in das Bit-Loading auch das Rauschen auf beiden Seiten ein, was in die Schlüsselgenerierung nicht einbezogen würde, bestenfalls als Störung, deren Einfluss durch Key-Reconciliation reduziert wird.

Bei Telefonleitungen oder Datenkabeln wäre die Schätzung der Übertragungsfunktion möglich, insbesondere, wenn keine zusätzlichen Abgänge, sogenannte Bridge Taps, vorhanden sind, was in Europa üblicherweise nicht der Fall ist. Fernnebensprechübertragungsfunktion bieten sich dann besonders an, da sie keine solche Möglichkeit der Schätzung bieten.

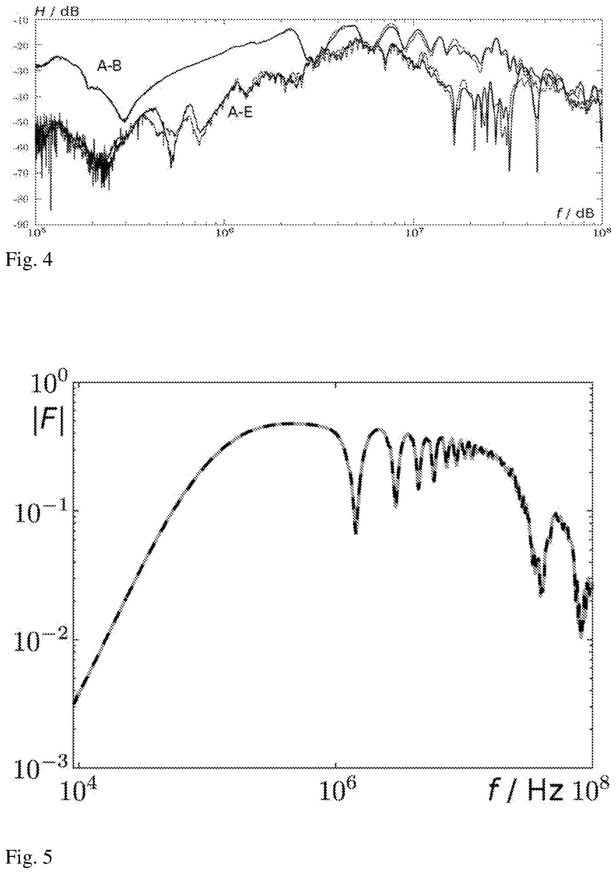

Figur 4 zeigt Messungen von direkten Übertragungsfunktionen zwischen Alice und Bob und Alice und Eve für ein in Figur 3 dargestellte Energieversorgungskabelverbindung, an dem Steckdosen mit noch nicht perfekt gestalteten Endeinrichtungen beschaltet sind. Figur 4 zeigt ebenso die jeweiligen entgegengesetzten Messungen zwischen Bob und Alice und Eve und Alice, wobei geringe Abweichungen zwischen den entgegengesetzten Messungen auf die nichtperfekten Eigenschaften der verwendeten Messeinrichtung zurückzuführen sind.

Diese Messung zeigt, dass ein Angreifer praktisch trotz Zugang zum Kabel oder anderen Steckdosen im Falle von Energienetzen eine direkte Übertragungsfunktion nicht exakt rekonstruieren kann.

Figur 5 zeigt den Betrag der Fernnebensprechübertragungsfunktionen, die in einem Dreiadersystem innerhalb eines fünfadrigen Kabels zwischen Alice und Bob gemessen wurden. Da die Messungen in beide Richtungen völlig überlappend sind, wurde eine Kurve gestrichelt dargestellt, um die zweit Kurve dahinter sichtbar zu machen.

Hieran erkennt man, dass Kopplungsfunktionen bei Energiekabeln deutlich stärker als bei symmetrischen Telefonleitungen oder Datenkabeln sind. Energieverbraucher führen allerdings auch zu stärkeren Störungen, die bei der Quantisierung durch geeignete Key-Reconciliation zu berücksichtigen sind. Ein Wechsel von Verbrauchern führt zu wechselnden Abschlüssen und damit zu Änderungen in den Übertragungsfunktionen, was neue Schlüsselzuweisungen zur Folge hat.

Zum Erzeugen eines kryptographischen Schlüssels sowohl für den ersten Benutzer Alice als auch für den zweiten Benutzer Bob kann gemäß einem Ausführungsbeispiel wie folgt vorgegangen werden.

Alice und Bob sind durch zwei Adernpaare AP1, AP2 verbunden. An einer Stelle zwischen Alice und Bob hat ein Dritter Zugriff auf das Hierbei wird ein passiver "Man-in-the-Middle-Angriff" angenommen, d.h. Eve kann alle zwischen Alice und Bob ausgetauschten Signale an dieser Stelle abhören.

Die kabelbasierte Kommunikation zwischen Alice und Bob verwendet in diesem Ausführungsbeispiel vier unterschiedliche Frequenzen.

Für diese vier unterschiedlichen Frequenzen wird die Übertragungsfunktion zwischen Alice und Bob gemessen.

Die hier verwendete Übertragungsfunktion ist die FEXT-Übertragungsfunktion. Diese wird jeweils für die vier verwendeten Frequenzen zwischen Alice und Bob gemessen. Hierzu wird eine Funktion in das erste Adernpaar AP1 bei Alice eingespeist und an dem zweiten Adernpaar AP2 bei Bob gemessen. Die gemessenen FEXT- Übertragungsfunktion ist eine komplexwertige Funktion.

Daraufhin werden die gemessenen Übertragungsfunktionen jeweils für die vier unterschiedlichen Frequenzen quantisiert. Vorliegend wird für jede Frequenz eine einer Vektorquantisierung der FEXT-Übertragungsfunktion durchgeführt.

Hierzu wird in einem ersten Schritt, dem sogenannten Training, eine Tabelle, auch Codebuch genannt, mit häufig vorkommenden Merkmalsvektoren erstellt. Im zweiten Schritt wird für weitere Vektoren jeweils der Codebuchvektor mit dem geringsten Abstand bestimmt. Durch diese Quantisierung ergeben sich für jede der vier Frequenzen unterschiedliche Voronoi-Regionen, welche jeweils in einem Voronoi-Diagramm darstellbar sind.

Jeder Voronoi-Region wird ein Bitmuster zugewiesen.

Im letzten Schritt der kryptographische Schlüssel aus den Bitmustern gebildet.

## Patentansprüche

1. Verfahren zum Erzeugen eines kryptographischen Schlüssels für ein elektronisches, kabelbasiertes Kommunizieren zwischen einem ersten Benutzer und einem zweiten Benutzer, wobei das Verfahren folgende Schritte aufweist:

   - Messen jeweils einer Übertragungsfunktion oder Bestimmen einer aus der gemessenen Übertragungsfunktion abgeleiteten Größe zwischen dem ersten und dem zweiten Benutzer jeweils durch den ersten und den zweiten Benutzer,
   - Quantisieren der jeweiligen Übertragungsfunktion oder der daraus abgeleiteten Größe, sodass jeweils quantisierte Werte der Übertragungsfunktion oder der abgeleiteten Größe vorliegen, und
   - jeweiliges Zuweisen eines Bitmusters zu den quantisierten Werten der jeweiligen Übertragungsfunktion oder der abgeleiteten Größe, wobei das Bitmuster zumindest einen Teil des jeweiligen kryptographischen Schlüssels bildet und die Übertragungsfunktion zufallsbasiert aktiv verändert wird, sodass bei den zwei kommunizierenden Benutzern ein kryptographischer Schlüssel erzeugt werden, ohne dass der Schlüssel selbst übertragen werden muss und ohne dass ein Dritter den Schlüssel erlangen kann.

2. Verfahren gemäß Anspruch 1, **dadurch gekennzeichnet, dass** die Übertragungsfunktion eine direkte Übertragungsfunktion oder eine Fernnebensprechübertragungsfunktion ist.

3. Verfahren einem der vorhergehenden Ansprüche, **dadurch gekennzeichnet, dass** die kabelbasierte Kommunikation wenigstens mittels eines Kabels erfolgt, welches mindestens ein Adernpaar, insbesondere mindestens zwei Adernpaare, aufweist.

4. Verfahren einem der vorhergehenden Ansprüche, **dadurch gekennzeichnet, dass** die kabelbasierte Kommunikation mindestens ein Dreileiterkabel verwendet.

5. Verfahren gemäß einem der vorhergehenden Ansprüche, **dadurch gekennzeichnet, dass** die Quantisierung eine skalare Quantisierung oder eine Vektorquantisierung ist.

6. Verfahren gemäß Anspruch 5, **dadurch gekennzeichnet, dass** die Vektorquantisierung auf eine Größe angewendet wird, welche durch Real- und Imaginärteil oder Betrag und Phase charakterisiert ist.

7. Verfahren gemäß einem der vorhergehenden Ansprüche, **dadurch gekennzeichnet, dass** die Übertragungsfunktion oder die Fernnebensprechübertragungsfunktion bei mindestens einer Frequenz verwendet wird.

8. Verfahren gemäß Anspruch 7, **dadurch gekennzeichnet, dass** die mindestens eine Frequenz eine Frequenz eines Mehrträgersystems, insbesondere OFDM oder DMT, ist.

9. Verfahren gemäß einem der vorhergehenden Ansprüche, **dadurch gekennzeichnet, dass** die Übertragungsfunktion in einer Zeitbasis, einer Frequenzbasis oder einer anderen geeigneten Basis dargestellt wird und die Quantisierung in dieser Darstellung erfolgt.

10. Verfahren gemäß einem der vorhergehenden Ansprüche, **dadurch gekennzeichnet, dass** die aus der gemessenen Übertragungsfunktion abgeleiteten Größe die Frequenzen von lokalen Minima oder lokalen Maxima der Übertragungsfunktion umfassen.

**11.** Rechner, welcher derart eingerichtet ist, dass ein Verfahren gemäß einem der Ansprüche 1 bis 10 durchführbar ist.

**Claims**

**1.** A method for generating a cryptographic key for an electronic, cable-based communication between a first user and a second user, wherein the method comprises the following steps:

- measuring a transmission function, respectively, or determining a variable, derived from the measured transmission function, between the first and the second user, respectively, by the first and the second user,
- quantizing the respective transmission function or the variable derived therefrom, so that respectively quantized values of the transmission function or the derived variable are present, and
- respective assigning of a bit pattern to the quantized values of the respective transmission function or the derived variable, wherein the bit pattern forms at least a part of the respective cryptographic key and the transmission function is actively changed randomly, so that a cryptographic key is generated at the two communicating users, without the key itself having to be transmitted and without a third party being able to acquire the key.

**2.** The method according to claim 1, **characterized in that** the transmission function is a direct transmission function or a far-end crosstalk transmission function.

**3.** The method according to any one of the preceding claims, **characterized in that** the cable-based communication occurs by means of at least one cable, which comprises at least one wire pair, in particular at least two wire pairs.

**4.** The method according to any one of the preceding claims, **characterized in that** the cable-based communication uses at least a three-conductor cable.

**5.** The method according to any one of the preceding claims, **characterized in that** the quantization is a scalar quantization or a vector quantization.

**6.** The method according to claim 5, **characterized in that** the vector quantization is applied to a variable which is **characterized by** real and imaginary part or absolute value and phase.

**7.** The method according to any one of the preceding claims, **characterized in that** the transmission function or the far-end crosstalk function is used in at least one frequency.

**8.** The method according to claim 7, **characterized in that** the at least one frequency is a frequency of a multi-carrier system, in particular OFDM or DMT.

**9.** The method according to any one of the preceding claims, **characterized in that** the transmission function is represented on a time basis, a frequency basis, or another suitable basis, and the quantization occurs in this representation.

**10.** The method according to any one of the preceding claims, **characterized in that** the variable derived from the measured transmission function includes the frequencies of local minimums or local maximums of the transmission function.

**11.** A computer, which is configured in such a manner, that a method according to one of claims 1 to 10 can be performed.

**Revendications**

**1.** Procédé de génération d'une clé cryptographique pour une communication par câble électronique entre un premier utilisateur et un deuxième utilisateur, dans lequel le procédé présente des étapes suivantes :

- de mesure respectivement d'une fonction de transfert ou de définition d'une grandeur déduite de la fonction de transfert mesurée entre le premier et le deuxième utilisateur respectivement par le premier et le deuxième utilisateur,

- de quantification de la fonction de transfert respective ou de la grandeur déduite sur cette base si bien que des valeurs respectivement quantifiées de la fonction de transfert ou de la grandeur déduite sont présentes, et
- d'attribution respective d'un motif binaire aux valeurs quantifiées de la fonction de transfert respective ou de la grandeur déduite, dans lequel le motif binaire forme au moins une partie de la clé cryptographique respective et la fonction de transfert est modifiée activement de manière aléatoire si bien qu'une clé cryptographique est générée pour les deux utilisateurs qui communiquent sans que la clé ne doive elle-même être transférée et sans qu'un tiers ne puisse obtenir la clé.

2. Procédé selon la revendication 1, **caractérisé en ce que** la fonction de transfert est une fonction de transfert directe ou une fonction de transfert de télédiaphonie.

3. Procédé selon l'une quelconque des revendications précédentes, **caractérisé en ce que** la communication par câble est effectuée au moins au moyen d'un câble, lequel présente une paire de brins, en particulier au moins deux paires de brins.

4. Procédé selon l'une quelconque des revendications précédentes, **caractérisé en ce que** la communication par câble utilise au moins un câble à trois conducteurs.

5. Procédé selon l'une quelconque des revendications précédentes, **caractérisé en ce que** la quantification est une quantification scalaire ou une quantification vectorielle.

6. Procédé selon la revendication 5, **caractérisé en ce que** la quantification vectorielle est appliquée sur une grandeur, laquelle est **caractérisée par** une partie réelle et imaginaire ou une valeur et une phase.

7. Procédé selon l'une quelconque des revendications précédentes, **caractérisé en ce que** la fonction de transfert ou la fonction de transfert de télédiaphonie est utilisée à au moins une fréquence.

8. Procédé selon la revendication 7, **caractérisé en ce que** l'au moins une fréquence est une fréquence d'un système à porteuses multiples, en particulier OFDM ou DMT.

9. Procédé selon l'une quelconque des revendications précédentes, **caractérisé en ce que** la fonction de transfert est représentée selon une base temporelle, une base de fréquence ou une autre base adaptée et la quantification est effectuée dans cette représentation.

10. Procédé selon l'une quelconque des revendications précédentes, **caractérisé en ce que** la grandeur déduite à partir de la fonction de transfert mesurée comprend les fréquences de minima locaux ou de maxima locaux de la fonction de transfert.

11. Calculateur, lequel est mis au point de telle manière qu'un procédé selon l'une quelconque des revendications 1 à 10 peut être mis en œuvre.

Fig. 1

Fig. 2

Fig. 3

10

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070177729 A1
- WO 2010030927 A2
- US 2011087897 A1

**In der Beschreibung aufgeführte Nicht-Patentliteratur**

- **ISLAM, N. ; GRAUR, O. ; HENKEL, W. ; FILIP, A.** LDPC Code Design Aspects for Physical-Layer Key Reconciliation. *IEEE International Global Communications Conference, San Diego, California,* 2015
- **FILIP, A. ; HENKEL, W.** Variable Guard Band Construction to Support Key Reconciliation. *IEEE International Conference on Acoustics, Speech, and Signal Processing (ICASSP 2014), Florence, Italy,* 2014
- **FILIP, A. ; MEHMOOD, R. ; WALLACE, J. ; HENKEL, W.** Physical-Layer Key Generation Supported by RECAP Antenna Structures. *9th International ITG Conference on Source and Channel Coding (SCC), Munich, Germany,* 2013
- **ETESAMI, J. ; HENKEL, W.** LDPC Code Construction for Wireless Physical-Layer Key Reconciliation. *First IEEE International Conference on Communications in China (ICCC 12), Beijing, China,* 2012